# EUROPEAN PATENT APPLICATION

(11) **EP 1 262 269 A1**
(43) Date of publication of application: **04.12.2002**
(21) Application number: 02253779.9
(22) Date of filing: 29.05.2002
(51) Int. Cl.: B23K 20/06

(54) **Method for performing a magnetic pulse welding operation using a plurality of magnetic inductors**

(30) Priority: 31.05.2001 US 294947 P
(71) Applicant: DANA CORPORATION, Toledo, OH 43606 (US)
(72) Inventor: Kichline, John L., Reading, Pennsylvania 19606 (US)
(74) Representative: Giles, Ashley Simon

(57) **Abstract**

A method and apparatus for permanently joining first and second metallic components uses magnetic pulse welding techniques. Initially, the end portions of first and second metallic components are oriented in a concentric, axially overlapping relationship. The first and second metallic components may be formed from either the same or different materials as desired. A plurality of inductors are disposed concentrically about or within the overlapping portions of the first and second metallic members. The inductors may be arranged adjacent one another in an axially end-to-end manner. Then, the plurality of inductors is sequentially energized so as to cause respective areas of the first metallic component to be deformed into engagement with associated areas of the second metallic component to permanently join the first and second metallic components together. If desired, the plurality of inductors may be energized in the order in which they are physically oriented relative to the first and second metallic components.

## Description

### BACKGROUND OF THE INVENTION

This invention relates in general to magnetic pulse welding techniques for permanently joining two metallic components, such as a pair of vehicle frame components. In particular, this invention relates to an improved method and apparatus for performing a magnetic pulse operation in which a plurality of electromagnetic inductors are sequentially energized to permanently join the two metallic components.

Magnetic pulse welding is a well known process that can be used to permanently join two metallic components, such as a pair of vehicle frame components. Typically, a magnetic pulse welding operation is performed by initially disposing the end portions of first and second components in a concentric, axially overlapping relationship. An electromagnetic inductor or coil is provided for generating an intense magnetic field either within or about the axially overlapping portions of the first and second components. When this occurs, a large pressure is exerted on one of the first and second components, causing it to move toward the other of the first and second components at a high velocity. If the electromagnetic inductor is disposed about the exterior of the two components, then the outer component is deformed inwardly into engagement with the inner component. If, on the other hand, the electromagnetic inductor is disposed within the interior of the two components, then the inner component is deformed outwardly into engagement with the outer component. In either event, the high velocity impact of the first and second components cause the two metallic components to become permanently joined or welded together.

Although this process has functioned effectively, it has been found to be somewhat difficult to employ in some instances, particularly when the two metallic components are relatively large in size or when the axial extent of the overlapping portions is relatively large. These instances can, for example, occur when the two components being joined together are vehicle frame components. Thus, it would be desirable to provide an improved method and apparatus that facilitates the performance of a magnetic pulse operation and can provide improved process control, particularly when the two metallic components are relatively large in size or when the axial extent of the overlapping portions is relatively large.

### SUMMARY OF THE INVENTION

This invention relates to an improved method and apparatus for permanently joining first and second metallic components using magnetic pulse welding techniques. Initially, the end portions of first and second metallic components are oriented in a concentric, axially overlapping relationship. The first and second metallic components may be formed from either the same or different materials as desired. A plurality of inductors are disposed either concentrically about or within the overlapping portions of the first and second metallic members. The inductors may be arranged adjacent one another in an axially end-to-end manner. Then, the plurality of inductors is sequentially energized so as to cause respective areas of the first metallic component to be deformed into engagement with associated areas of the second metallic component to permanently join the first and second metallic components together. If desired, the plurality of inductors may be energized in the order in which they are physically oriented relative to the first and second metallic components.

Various objects and advantages of this invention will become apparent to those skilled in the art from the following detailed description of the preferred embodiment, when read in light of the accompanying drawings.

### BRIEF DESCRIPTION OF THE DRAWINGS

Fig. 1 is a sectional elevational view illustrating two metallic components prior to being permanently joined together by a prior art method and apparatus for performing a magnetic pulse welding operation including a single electromagnetic inductor.

Fig. 2 is a sectional elevational view similar to Fig. 1 illustrating the two metallic components after being permanently joined together by the prior art method and apparatus for performing a magnetic pulse welding operation.

Fig. 3 is a block diagram of a prior art apparatus for performing the magnetic pulse operation illustrated in Figs. 1 and 2.

Fig. 4 is a sectional elevational view illustrating two metallic components prior to being permanently joined together by a method and apparatus in accordance with this invention for performing a magnetic pulse welding operation including a plurality of electromagnetic inductors.

Fig. 5 is a sectional elevational view similar to Fig. 4 illustrating the two metallic components after a first one of the plurality of electromagnetic inductors has been energized to partially perform the magnetic pulse welding operation.

Fig. 6 is a sectional elevational view similar to Fig. 5 illustrating the two metallic components after a second one of the plurality of electromagnetic inductors has been energized to partially perform the magnetic pulse welding operation.

Fig. 7 is a sectional elevational view similar to Fig. 6 illustrating the two metallic components after a third one of the plurality of electromagnetic inductors has been energized to complete the magnetic pulse welding operation.

Fig. 8 is a block diagram of an apparatus for performing the magnetic pulse operation illustrated in Figs. 4, 5, 6, and 7.

### DETAILED DESCRIPTION OF THE PREFERRED EMBODIMENT

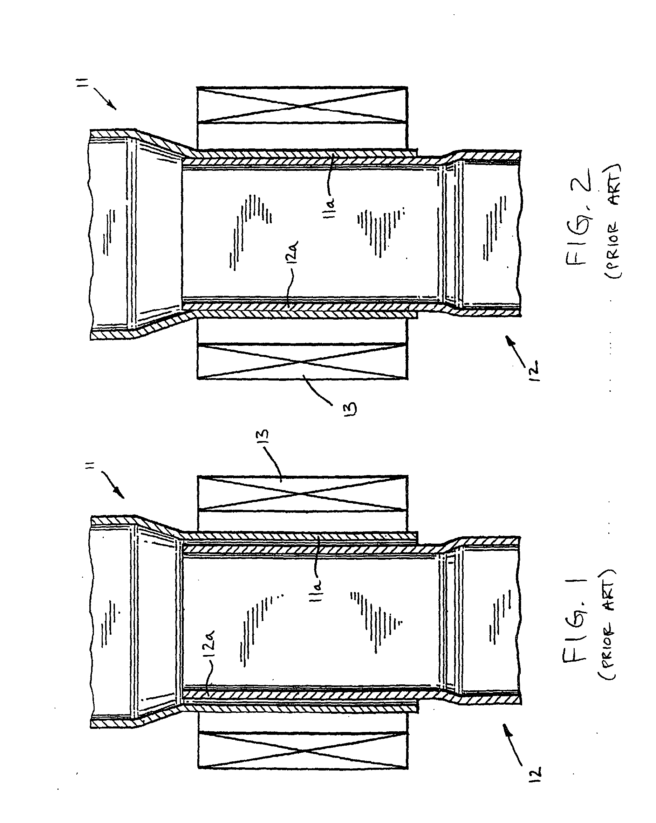

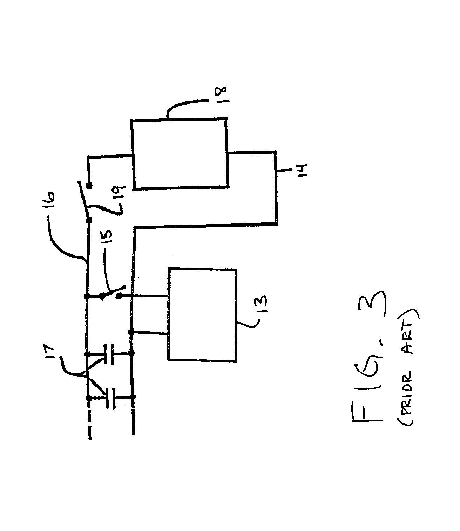

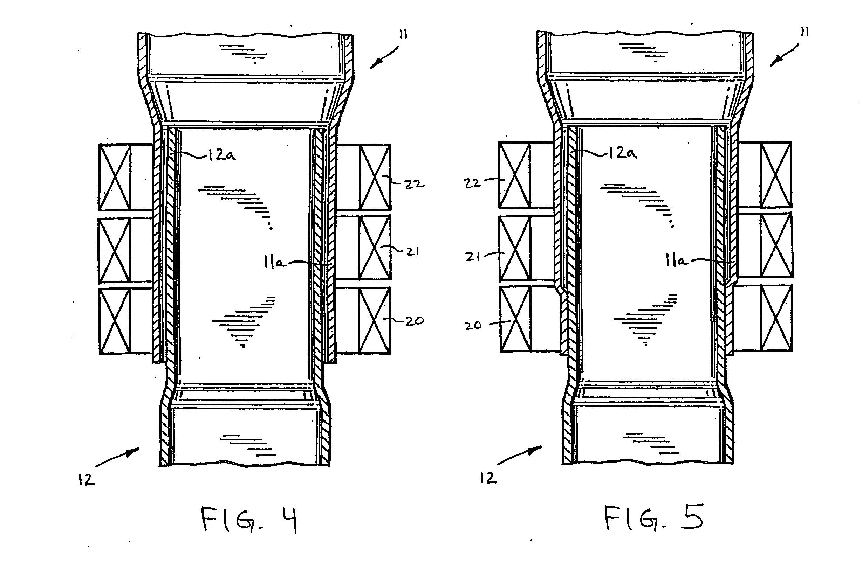

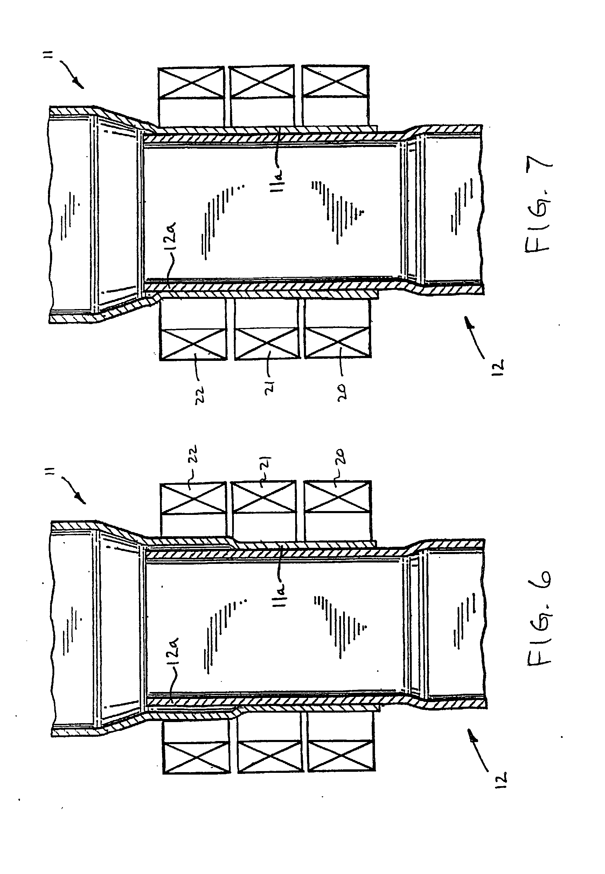

Referring now to the drawings, there is illustrated in Fig. 1 is a sectional elevational view of two metallic components, indicated generally at 11 and 12, prior to being permanently joined together by a prior art method and apparatus for performing a magnetic pulse welding operation. The two metallic components 11 and 12 are hollow and cylindrical in shape and have respective end portions 11a and 12a that are disposed in a concentric, axially overlapping relationship. The two metallic components 11 and 12 may be formed from either the same or different materials as desired. A single electromagnetic inductor or coil 13 is provided concentrically about the overlapping end portions 11a and 12a of the metallic components 11 and 12. In a manner that is described further below, the electromagnetic inductor 13 selectively generates an intense magnetic field about the overlapping end portions 11a and 12a of the metallic components 11 and 12. When this occurs, a large pressure is exerted on the end portion 11a of the outer metallic component 11, causing it to be deformed inwardly into engagement with the end portion 12a of the inner metallic component 12, as shown in Fig. 2. The high velocity impact of the end portions 11a and 12a of the metallic components 11 and 12 causes the two end portions 11a and 12a to become permanently joined together.

Although not illustrated, it is also known to dispose the electromagnetic inductor 13 within the interiors of the end portions 11a and 12a. When so disposed, the electromagnetic inductor 13 generates the intense magnetic field within the overlapping end portions 11a and 12a of the metallic components 11 and 12, causing a large pressure to be exerted on the end portion 12a of the inner metallic component 12. As a result, the end portion 12a of the inner metallic component 12 is deformed outwardly into engagement with the end portion 11a of the outer metallic component 11. The high velocity impact of the end portions 11a and 12a of the metallic components 11 and 12 causes the two end portions 11a and 12a to become permanently joined together.

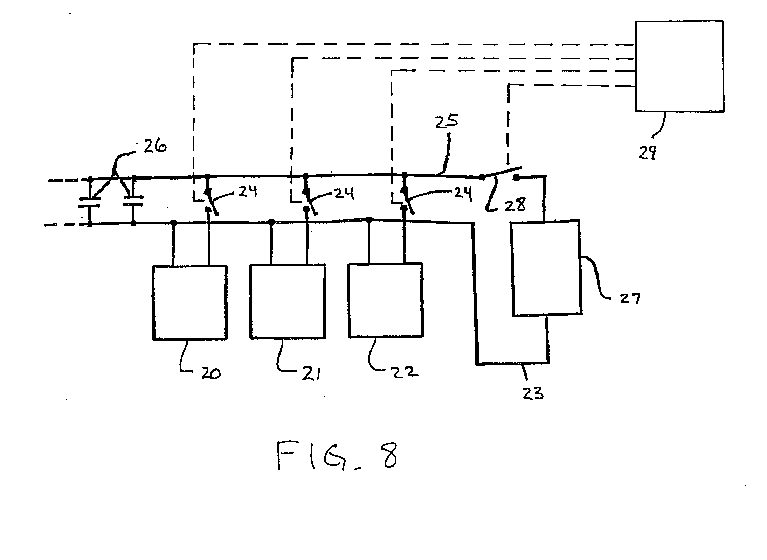

Fig. 3 is a block diagram of a prior art apparatus for selectively causing the inductor 13 to generate the intense magnetic field so as to perform the magnetic pulse operation illustrated in Figs. 1 and 2. As shown therein, a first end of the inductor 13 is connected to a first electrical conductor 14, while a second end of the inductor 13 is connected through a discharge switch 15 to a second electrical conductor 16. A plurality of high voltage capacitors 17 or similar energy storage devices are connected between the first and second electrical conductors 14 and 16. The first electrical conductor 14 is also connected to a source of electrical energy 18, while the second electrical conductor 16 is connected through a charging switch 19 to the source of electrical energy 18.

The operation of the inductor 13 to perform the magnetic pulse welding operation is well known in the art, and reference is made to the U.S. Patent No. 5,981,921 to Yablochnikov for a detailed explanation. The disclosure of that patent is incorporated herein by reference. Briefly, however, the inductor 13 is operated by initially opening the discharge switch 15 and closing the charging switch 19. This allows electrical energy to be transferred from the source of electrical energy 18 to each of the capacitors 17. When the capacitors 17 have been charged to a predetermined voltage, the charging switch 19 is opened. Thereafter, when it is desired to operate the inductor 13, the discharge switch 15 is closed. As a result, a high energy pulse of electrical current flows from the capacitors 17 through the inductor 13, thereby generating an immense and momentary electromagnetic field about the end portions 11a and 12a of the metallic components 11 and 12. This electromagnetic field exerts a very large force on the outer surface of the end portion 11a of the outer metallic component 11, causing it to collapse inwardly at a high velocity onto the end portion 12a of the inner metallic component 12, as described above.

Referring now Fig. 4, there is illustrated a sectional elevational view of the two metallic components, indicated generally at 11 and 12, prior to being permanently joined together by a method and apparatus in accordance with this invention for performing a magnetic pulse welding operation. As described above, the two metallic components 11 and 12 are hollow and cylindrical in shape and have respective end portions 11a and 12a that are disposed in a concentric, axially overlapping relationship. Instead of the single electromagnetic inductor 13 described above, a plurality of electromagnetic inductors 20, 21, and 22 are provided concentrically about the overlapping end portions 11a and 12a of the metallic components 11 and 12. In the illustrated embodiment, the electromagnetic inductors 20, 21, and 22 are arranged adjacent one another in an axially end-to-end manner. Thus, the first electromagnetic inductor 20 is located about an outermost area of the end portion 11a of the outer metallic component 11. Similarly, the second electromagnetic inductor 21 is located about an intermediate area of the end portion 11a of the outer metallic component 11. Lastly, the third electromagnetic inductor 22 is located about an innermost area of the end portion 11a of the outer metallic component 11. Although three electromagnetic inductors 20, 21, and 22 are illustrated, it will be appreciated that a greater or lesser number of such electromagnetic inductors 20, 21, and 22 may be provided in any desired orientation relative to one another and to the metallic components 11 and 12.

In a manner that is described further below, the electromagnetic inductors 20, 21, and 22 are selectively energized to generate respective intense magnetic fields about respective areas of the overlapping end portions 11a and 12a of the metallic components 11 and 12. When this occurs, large pressures are exerted on the end portion 11a of the outer metallic component 11, causing it to be deformed inwardly into engagement with the end portion 12a of the inner metallic component 12. The high velocity impact of the end portions 11a and 12a of the metallic components 11 and 12 causes the two end portions 11a and 12a to become permanently joined together.

To accomplish this, the electromagnetic inductors 20, 21, and 22 are selectively energized in a sequential manner. For example, as shown in Fig. 5, the first electromagnetic inductor 20 can be initially energized to cause the outermost area of the end portion 11a of the outer metallic component 11 to be deformed inwardly into engagement with the end portion 12a of the inner metallic component 12. Next, as shown in Fig. 6, the second electromagnetic inductor 21 can be energized to cause the intermediate area of the end portion 11a of the outer metallic component 11 to be deformed inwardly into engagement with the end portion 12a of the inner metallic component 12. Lastly, as shown in Fig. 7, the third electromagnetic inductor 22 can be energized to cause the innermost area of the end portion 11a of the outer metallic component 11 to be deformed inwardly into engagement with the end portion 12a of the inner metallic component 12.

Typically, the electromagnetic inductors 20, 21, and 22 will be energized in the order in which they are physically oriented relative to the metallic components 11 and 12, as shown in Figs. 5, 6, and 7. However, it should be noted that the electromagnetic inductors 20, 21, and 22 may be energized in any desired order, regardless of how they are physically oriented. As used herein, the term "sequential" indicates that the electromagnetic inductors 20, 21, and 22 are energized at different points in time, regardless of their physical orientation relative to one another and to the metallic components 11 and 12.

Fig. 8 is a block diagram of an apparatus for performing the magnetic pulse operation illustrated in Figs. 4, 5, 6, and 7. As shown therein, a first end of each of the inductors 20, 21, and 22 is connected to a first electrical conductor 23, while a second end of each of the inductors 20, 21, and 22 is connected through a discharge switch 24 to a second electrical conductor 25. A plurality of high voltage capacitors 26 or similar energy storage devices are connected between the first and second electrical conductors 23 and 25. The first electrical conductor 23 is also connected to a source of electrical energy 27, while the second electrical conductor 25 is connected through a charging switch 28 to the source of electrical energy 27. The operations of the discharge switches 24 and the charging switch 28 can be controlled in the manner described below by a control circuit 29, which can be embodied as any conventional electronic or otherwise programmable controller.

The electromagnetic inductors 20, 21, and 22 are operated by initially opening each of the discharge switches 24 and closing the charging switch 28. This allows electrical energy to be transferred from the source of electrical energy 27 to each of the capacitors 26. When the capacitors 26 have been charged to a predetermined voltage, the charging switch 28 is opened. Thereafter, when it is desired to operate the inductors 20, 21, and 22, the discharge switches 24 are sequentially closed. Thus, when the discharge switch 24 associated with the first inductor 20 is closed, a high energy pulse of electrical current flows from the capacitors 26 through the first inductor 20, thereby generating an immense and momentary electromagnetic field about the outermost area of the end portion 11a of the metallic component 11. This electromagnetic field exerts a very large force on the outer surface of the outermost area of the end portion 11a of the outer metallic component 11, causing it to collapse inwardly at a high velocity onto the end portion 12a of the inner metallic component 12, as described above. When the discharge switch 24 associated with the second inductor 21 is closed, a high energy pulse of electrical current flows from the capacitors 26 through the second inductor 21, thereby generating an immense and momentary electromagnetic field about the intermediate area of the end portion 11a of the metallic component 11. This electromagnetic field exerts a very large force on the outer surface of the intermediate area of the end portion 11a of the outer metallic component 11, causing it to also collapse inwardly at a high velocity onto the end portion 12a of the inner metallic component 12, as described above. Lastly, when the discharge switch 24 associated with the third inductor 22 is closed, a high energy pulse of electrical current flows from the capacitors 26 through the third inductor 22, thereby generating an immense and momentary electromagnetic field about the innermost area of the end portion 11a of the metallic component 11. This electromagnetic field exerts a very large force on the outer surface of the innermost area of the end portion 11a of the outer metallic component 11, causing it to also collapse inwardly at a high velocity onto the end portion 12a of the inner metallic component 12, as described above.

If desired, the apparatus for performing the magnetic pulse operation can be modified such that each of the electromagnetic inductors 20, 21, and 22 is provided with its own plurality of high voltage capacitors 26 and source of electrical energy 27, such as shown in Fig. 3, as opposed to sharing a common plurality of high voltage capacitors 26 and source of electrical energy 27 as shown in Fig. 8. Alternatively, some or all of the electromagnetic inductors 20, 21, and 22 can be disposed within the metallic components 11 and 12 (as opposed being disposed about such metallic components 11 and 12 as illustrated) to sequentially expand the end portion 12a of the inner metallic component 12 outwardly into engagement with the end portion 11a of the outer metallic component 11.

In accordance with the provisions of the patent statutes, the principle and mode of operation of this invention have been explained and illustrated in its preferred embodiment. However, it must be understood that this invention may be practiced otherwise than as specifically explained and illustrated without departing from its spirit or scope.

## Claims

1. A method for permanently joining first and second metallic components comprising the steps of:
(a) orienting the first and second metallic components in an overlapping relationship;
(b) disposing a plurality of inductors relative to the overlapping portions of the first and second metallic members; and
(c) sequentially energizing the plurality of inductors so as to cause respective areas of the first metallic component to be deformed into engagement with associated areas of the second metallic component to permanently join the first and second metallic components together.

2. The method defined in Claim 1 wherein said step (a) is performed by providing first and second metallic components formed from the same material.

3. The method defined in Claim 1 wherein said step (a) is performed by providing first and second metallic components formed from different materials.

4. The method defined in Claim 1 wherein said step (a) is performed by orienting end portions of the first and second metallic components in an overlapping relationship.

5. The method defined in Claim 1 wherein said step (a) is performed by orienting the first and second metallic components in a concentric, axially overlapping relationship.

6. The method defined in Claim 1 wherein said step (b) is performed by disposing the plurality of inductors components in a concentric, axially overlapping relationship relative to the overlapping portions of the first and second metallic members.

7. The method defined in Claim 1 wherein said step (b) is performed by disposing the plurality of inductors components in a concentric, axially overlapping relationship about the overlapping portions of the first and second metallic members.

8. The method defined in Claim 1 wherein said step (b) is performed by arranging the plurality of inductors adjacent one another in an axially end-to-end manner.

9. The method defined in Claim 1 wherein said step (c) is performed by energizing the plurality of inductors in the order in which they are physically oriented relative to the first and second metallic components.
